# EUROPEAN PATENT APPLICATION

(11) **EP 2 532 803 A2**
(43) Date of publication of application: **12.12.2012**
(21) Application number: 12003751.0
(22) Date of filing: 11.05.2012
(51) Int. Cl.: E04F 11/02

(54) **An improved step**

(30) Priority: 12.05.2011 GB 201107971
(71) Applicant: Morris & Alexander Limited, Norfolk NR21 8NT (GB)
(72) Inventor: Nixon, Philip, Fakenham Norfolk NR21 8NT (GB)
(74) Representative: Wilson, Peter David George

(57) **Abstract**

A step to assist a user entering or leaving a building via a raised doorstep having a horizontal platform, adjustable legs and a securing device to resist removal or movement of the step one portion of the securing device attachable to a leg of the step, and another portion to be secured to a permanent surface. Preferred embodiments of the step include non-slip surfaces and colour-contrasting regions.

## Description

### Field of the Invention

The present invention relates to a step which provides a step height intermediate between a lower level and an upper level: for example between the pavement and a raised doorstep. The step is suitable for use by those whose mobility is limited and provides an easily installable, safe and secure, and in one embodiment visible aid to enter and leave a room or building.

### Background to the Invention

Devices which aid persons whose mobility is limited are well known. The present invention is aimed primarily at those individuals who have difficulty in walking but who are nevertheless still mobile, albeit perhaps with assistance. The technical area addressed by the present invention is that of aiding mounting or coming down a step. As a particular example, the entrance door to a house often presents difficulties as the steps to such doors arc often raised.

One solution to this problem is the use of a step whose height is between that of the floor and the step: often referred to as a half-step. The person therefore does not have to negotiate as high a vertical distance as would otherwise be the case. There are however several disadvantages to the use of a half-step. Firstly, as the half-step is not secured in position there is a risk, particularly when the ground is wet, of the half-step moving under the impulse of the person stepping on or off the half-step. Secondly, the half-steps are usually relatively light so that they can be easily picked up. This lends itself however to the half-step being susceptible to being stolen. Thirdly, where the user also has limited vision or where the half-step is used in poorly lit conditions, then the half-step or outline of the edge of the half-step is often difficult to make out.

It is an object of the present invention to provide a half-step which addresses the above problems.

For the avoidance of doubt, references herein to a person going up the steps should be taken to include also going down a step.

### Summary of the Invention

According to a first aspect of the invention there is provided a step to assist a user in entering or leaving a building via a raised doorstep, the step providing a horizontal platform on which the user places their foot;
one or more legs to support the platform, the or each leg having an adjustable height;
a securing means to prevent or resist movement or removal of the step, the securing means having a first portion attachable to or about a leg of the step to retain the securing means about the leg, and
a second portion linked to the first portion the second portion including fixing means to enable said securing means to be secured to a permanent surface such as a floor or pavement.

The securing means therefore prevents unwanted movement of the step and reduces the risk of the step being stolen.

Optionally the fixing means comprises one or more apertures enabling a bolt/screw to pass through said aperture or apertures to fix the securing means to the floor.

Optionally the first portion of securing means includes an aperture passable about/around the leg to which the securing means is secured to enable easy fitment of the securing means without compromising the strength or integrity of the leg.

Preferably the height of the or each leg is adjustable to enable the height of the step to be adjusted to suit the user and the height of the step. Further preferably, the or each leg has two sections, the first section being rigidly secured to the underside of the horizontal platform and a second section removably fixable to the first section and adjustable in height. Yet further preferably, the second section comprises a shaft having an external thread said thread engaging an internal thread in the first section. Still yet further preferably, the height of the step is secured by means of a locking nut threadably attached to the shaft.

Preferably, the or each second section of the leg has a foot at its end on which the platform rests. Further preferably, the leg is attached to the foot by means of a swivel joint. Alternatively, attachment is by means of a ball and socket joint which enables the step to rest on a surface which is not level.

Optionally the base of the foot is made of a slip resistant or non-slip material. Additionally or alternatively, the base of the foot includes one or more non-slip portions attached thereto. Further optionally, the surface of the bate of the foot is grooved or profiled to reduce slippage.

Preferably, the material from which the upper surface of the platform is formed from a material which has a relatively high co-efficient of friction, so as to resist sliding movement of a user's foot. Optionally, said upper surface has a grooved or profiled configuration to reduce potential slippage by the user. Preferably, the horizontal platform is overlaid with a tread, the tread leaving one or more of the edges of the platform visible, the tread and the platform being of different materials or of different colour to enable the edge to be more easily seen.

According to a second aspect of the invention there is provided a securing means for use on a step having one or more legs; the securing means comprising a first planar portion having an aperture therethrough to secure about a leg of the step, a second planar portion, said second planar portion being parallel to the first planar portion and offset vertically and horizontally thereto enabling the second portion to rest on and be secured to the floor or surface on which the step rests, the second portion including fixing means enabling the securing means to be fixed to the floor.

### Brief Description of the Drawings

The invention is now described with reference to the accompanying drawings which show by way of example two embodiments of a half-step. In the drawings:
Figure 1 is a perspective view of a half-step;
Figure 2 is a perspective view of a first embodiment of a section of a leg;
Figures 3a, 3b illustrate fitment of the embodiment of the leg section of Figure 2 into a half-step;
Figures 4a, 4b illustrate fitment of a securing means to a leg section; and
Figures 5a, 5b illustrate securing of the securing means of Figures 4a, 4b.

### Detailed Description of the Invention

The problems and difficulties for persons whose mobility is restricted, of going up and down steps, and in particular a step often present at the front door of a building are well known. Crossing over the threshold therefore can often be hazardous. In the case of a wheelchair user, ramps are available which can hook over the doorstep allowing access. For those who still have the use, albeit limited, of their legs, so-called half-steps are available. Half-steps are removable steps of a height less than that of the height of the doorstep, which therefore requires the person to step up a lower distance than would otherwise be the case.

Once the person has entered through the door then the step can be removed. Many people however, because of the frequency of use of the step choose to leave the half-step outside the house on a permanent basis. Unfortunately this leaves the half-step as a target for thieves, which is not only costly in terms of money to the user, but can also be dangerous or leave the person trapped inside or outside the house.

A further problem with prior art half-steps is that they can move if the person puts their weight onto the step. Additionally, where lighting is poor or the user has limited vision then the edge of the step can be difficult to see and so the present invention provides means of improving visibility of the half-step.

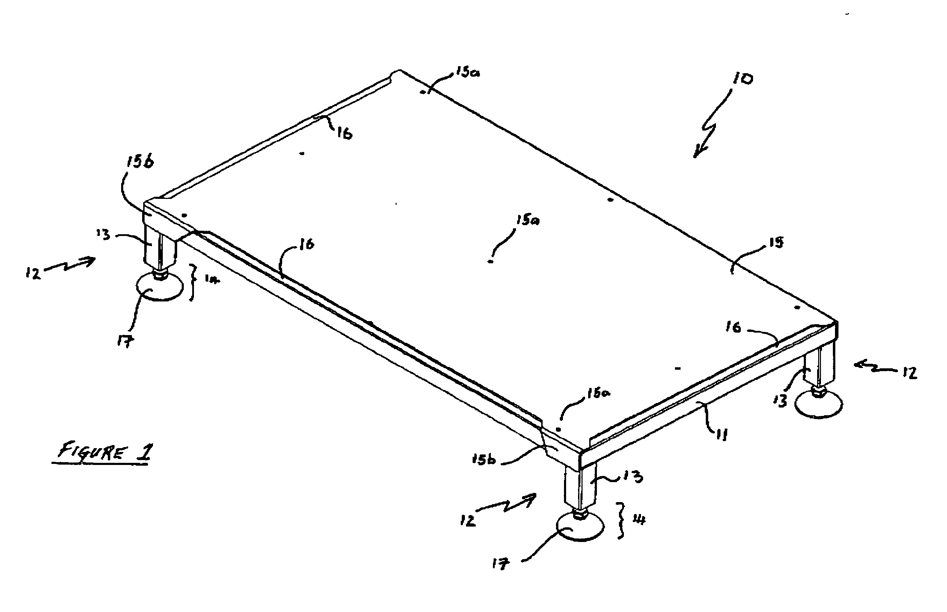

Referring initially to Figure 1, this shows the half-step, generally referenced 10. The half-step 10 has, in common with those of the prior art, a supporting platform 11 supported by four legs 12 at each corner. The legs 12 themselves comprise two sections: a rigid section 13 of fixed height and an adjustable section 14.

In use therefore the half-step 10 is put against the doorstep and the height of the half-step 10 adjusted by means of the adjustable section 14.

The half-step 10 illustrates a first aspect of the invention in that the supporting platform 11 is partially overlaid with a tread 15, which is firmly secured to the platform 11 at a number of points 15a. The tread 15 is secured to the platform 11 by conventional means well known in the art. The upper surface of the tread 15 is treated or configured to reduce the risk of a person's foot slipping as they place their weight on the surface. The tread 15 therefore can be formed of or coated with a material having a high co-efficient friction. Additionally or alternatively, the surface can be profiled to provide better grip to a user's footwear. In particularly preferred embodiments, the tread is itself weight-supporting, thereby allowing the platform to be of a frame-like construction.

In the illustrated embodiment, the tread 15 in Figure 1 does not cover the entire platform 11 but includes a number of cut-outs 16 which allow the platform 11 to be seen from above. As the cut-outs 16 are around the edges of the platform 11, these edges stand out clearly from the tread 15 which feature can be enhanced by forming the platform 11 and tread 15 of differently coloured materials or by application of surface coatings of different colours. The edges of the half-step are therefore clearly defined and reduce the risk that a person misses stepping onto the half-step: particularly where the person has limited vision or in poor light.

Alternatively a high visibility material may he applied to the edges of the half-step to improve the ability of a user to perceive the edge. It can be seen in Figure 1 that, in this embodiment, the a portion 15b of the tread 15 wraps over the edge of the platform 11. In a further embodiment, not illustrated the entire platform can be formed of a high visibility material.

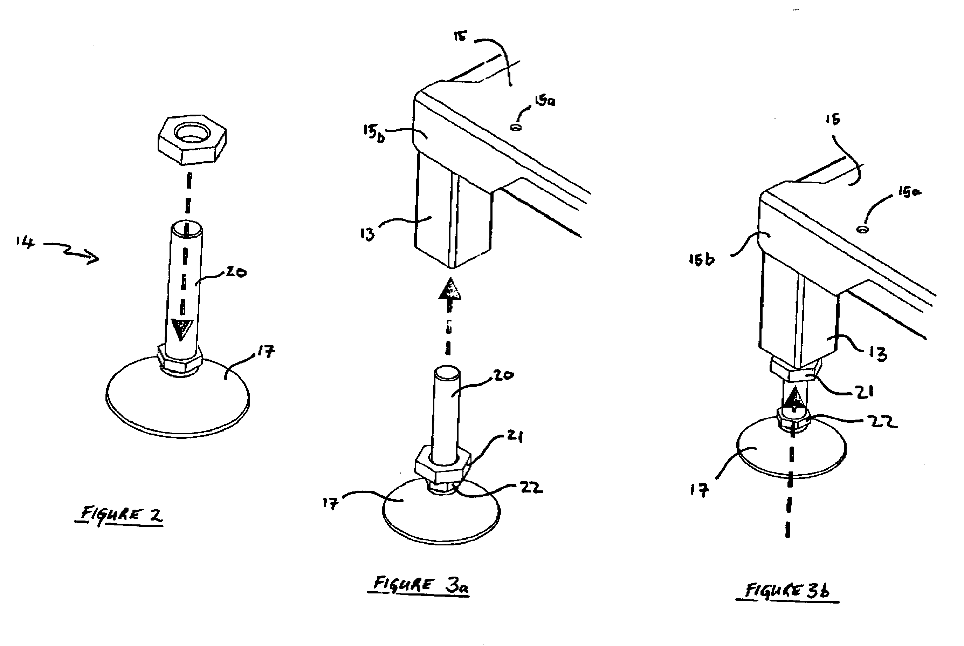

The distal end of the adjustable section 14 terminates in a foot 17 which is of broader width than the leg to give better stability and cause less damage to the surface. The assembly and fitting of the adjustable section is shown in more detail in Figures 2 and 3. In the illustrated embodiment the adjustable section 14 is removable from the half step 10 to enable replacement, either because of wear or to introduce a longer adjustable section 14 if so required.

The adjustable section 14 comprises a shaft 20 which has a thread on its outer surface. One end of the shaft 20 terminates in the foot 17. The shaft 20 and the foot 17 can be secured together by conventional means which can be selected according to intended use and can be a rigid or a flexible joint. In an advantageous embodiment the foot 17 and shaft 20 are joined by a ball and socket arrangement (not illustrated) which enables the half-step 10 to be safely used even on uneven surfaces. Tn this arrangement, the shaft 20 extends to a ball which inserts into a recess within the foot 17. The foot 17 is made up of slightly resilient material which allows the ball to be inserted and retained within the recess by the walls of the recess. If the foot 17 needs to be replaced it can simply be pulled off and a new one attached.

The foot 17 is of frusto-conical shape and in use rests on the lower, circular flat surface. The foot 17 or at least the lower surface is advantageously made of a non-slip material to improve the safety of the half-step. Additionally or alternatively, non-slip areas can be created on the lower surface.

In order to enable the height of the adjustable portion to be changed a locking nut 21 is provided which is screwed onto the thread of the shaft 20. The stop member 22 which in the illustrated embodiment is itself in the shape of a hexagonal nut defines the lower limit for the locking nut 21.

In use therefore, the shaft 20 of the adjustable section 14 is inserted into the rigid section 13 of the leg 12 and with the screw-thread of the shaft 20 engaging a corresponding thread inside the rigid section 13. When the height of the leg 12 is at the required level, the locking nut 21 is tightened against the rigid section 13.

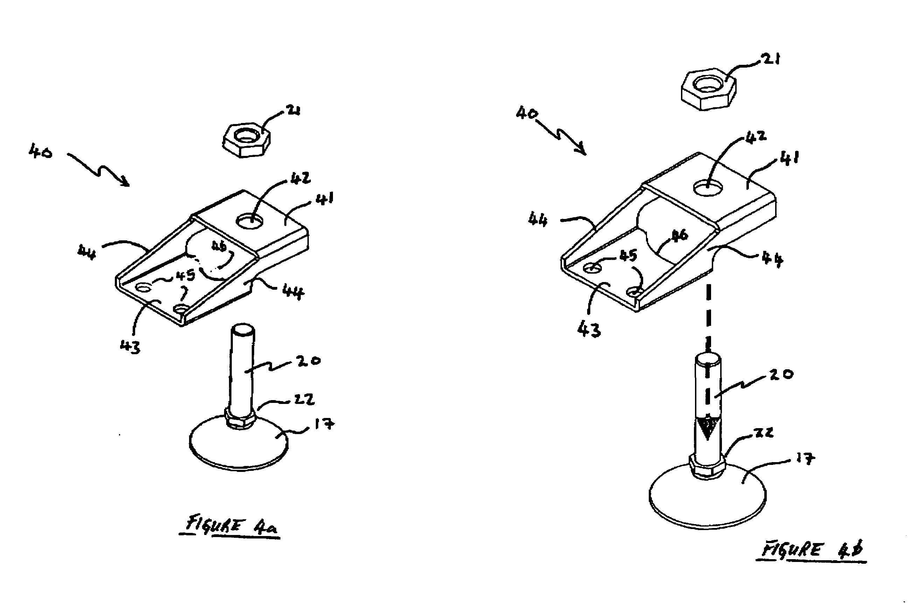

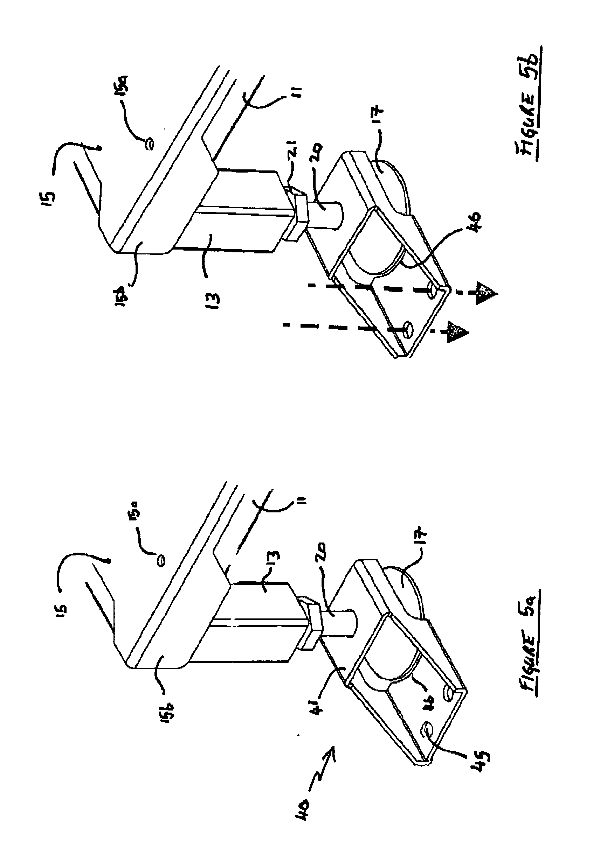

In Figures 4 and 5 an additional feature, in accordance with a further aspect of the invention is shown. This further feature improves both the safety and also the security of the half-step 10 in that the section prevents movement of the half-step 10 and also provides hindrance to the half-step 10 being stolen or accidentally removed.

In these figures, a securing bracket 40 is shown. The securing bracket has a first plate 41 having an aperture 42 to enable the bracket 40 to pass over the shaft 20. A second plate 43 is connected to and extends away from the first plate 41 supported by arms 44. The second plate 43 is separated vertically from the first plate 41 so that in use the first plate 41 rests on the stop 22, whilst the second plate 43 rests on the ground or surface.

When the half-step 10 is in position therefore, the bracket 10 can be set in position and secured in place by means of conventional fixing means passed through the apertures 45 as shown by the arrows in Figure 5b. In order to facilitate this, the configuration of the rear edge 46 of the second plate 43 is contoured to complement the shape of the foot 17.

It will of course be understood that the invention is not limited to the specific details described herein, which are given by way of example only, and that various modifications and alterations are possible within the scope of the invention.

## Claims

1. A step to assist a user in entering or leaving a building via a raised doorstep, the step comprising:
a horizontal platform on which the user places their foot;
one or more legs to support the platform, the or each leg having an adjustable height;
a securing means to resist movement or removal of the step, the securing means having a first portion attachable to or about a leg of the step to retain the securing means about the leg, and
a second portion linked to the first portion the second portion including fixing means to enable said securing means to be secured to a permanent surface such as a floor or pavement.

2. The step of Claim 1 wherein the first portion of said securing means includes an aperture passable about/around the leg to which the securing means is secured.

3. A step according to Claim 1 or Claim 2 wherein the or each leg comprises a first section being rigidly secured to the underside of the horizontal platform and a second section removably fixable to the first section, and adjustable in height.

4. A step according to Claim 3 wherein said second section comprises a shaft having an external thread said thread engaging an internal thread in the first section.

5. A step according to Claim 4 wherein the height of the step is secured by means of a locking nut threadably attached to the shaft.

6. A step according to any preceding claim wherein the or each second section of the leg has a foot at its end.

7. A step according to Claim 6 wherein the leg is attached to said foot by means of a swivel or ball-and-socket joint.

8. A step according to either of Claims 6 and 7 wherein the base of the foot is made of a slip resistant or non-slip material.

9. A step according to either of Claims 6 and 7 wherein the base of the foot includes one or more non-slip portions attached thereto.

10. A step according to either of Claims 6 and 7 wherein the base of the foot is grooved or profiled to reduce slippage.

11. A step according to any preceding claim wherein the upper surface of the platform is formed from a material having a relatively high co-efficient of friction, so as to resist sliding movement of a user's foot.

12. A step according to any preceding claim wherein said upper surface has a grooved or profiled configuration to reduce potential slippage by the user.

13. A step according to any preceding claim wherein said horizontal platform is overlaid with a tread, the tread leaving one or more of the edges of the platform visible, the tread and the platform being of different materials or of different colour.

14. A securing means for use on a step having one or more legs, said securing means comprising a first planar portion having an aperture therethrough to secure about a leg of the step, a second planar portion, said second planar portion being parallel to the first planar portion and offset vertically and horizontally thereto enabling the second portion to rest on and be secured to the floor or surface on which the step rests, the second portion including fixing means enabling the securing means to be fixed to the floor.
